# EUROPÄISCHE PATENTANMELDUNG

(11) **EP 1 217 019 A1**
(43) Veröffentlichungstag der Anmeldung: **26.06.2002**
(21) Anmeldenummer: 01126659.0
(22) Anmeldetag: 08.11.2001
(51) Int. Cl.: C08G 18/40

(54) **Verfahren zur Herstellung von Polyurethanweichschaumstoffen**

(30) Priorität: 19.12.2000 DE 10063194
(71) Anmelder: BASF AKTIENGESELLSCHAFT, 67056 Ludwigshafen (DE)
(72) Erfinder: Falke, Peter, Dr., 01987 Schwarzheide (DE)

(57) **Zusammenfassung**

Gegenstand der Erfindung ist ein Verfahren zur Herstellung von Polyurethanweichschaumstoffen durch Umsetzung von organischen und/oder modifizierten organischen Polyisocyanaten (a) mit einem Polyolgemisch (b) und gegebenenfalls weiteren gegenüber Isocyanaten reaktive Wasserstoffatome aufweisenden Verbindungen (c) in Gegenwart von Wasser und/oder anderen Treibmitteln (d), Katalysatoren (e) und gegebenenfalls weiteren Hilfs- und Zusatzstoffen (f), das dadurch gekennzeichnet ist, dass das Polyetherolgemisch (b) besteht aus
b1) mindestens einem mindestens zweifunktionellen Polyesterol auf der Basis von Adipinsäure und mehrfunktionellen Alkoholen mit einer OH-Zahl von 40 bis 100 mg KOH/g in Anteilen von mehr als 50 Gew.-%, bezogen auf das Gesamtgewicht der Komponente b),
b2) mindestens einem mindestens zweifunktionellen Polyetherol auf der Basis von Propylenoxid und/oder Butylenoxid bei einer OH-Zahl von größer als 25 mg KOH/g in Anteilen von weniger als 25 Gew.-%, bezogen auf das Gesamtgewicht der Komponente b),
   und gegebenenfalls
b3) mindestens einem weiteren Polyetherol auf der Basis von Ethylenoxid und Propylenoxid und/oder Butylenoxid mit einem Anteil an primären OH-Gruppen von mehr als 30 % in Anteilen von 0 bis 25 Gew.-%, bezogen auf das Gesamtgewicht der Komponente b).

Gegenstände der Erfindung sind weiterhin die nach diesem Verfahren hergestellten Polyurethanweichschaumstoffe selbst sowie deren Verwendung für Polsterzwecke, im Fahrzeugbau und im medizinischen Bereich, insbesondere zur Herstellung von flammkaschierbaren oder hochfrequenzverschweißbaren Verbundstoffen.

## Beschreibung

Die Erfindung betrifft ein Verfahren zur Herstellung von Polyurethanweichschaumstoffen durch Umsetzung von organischen und/oder modifizierten organischen Polyisocyanaten (a) mit einem speziellen Polyolgemisch (b) und gegebenenfalls weiteren gegenüber Isocyanaten reaktive Wasserstoffatome aufweisenden Verbindungen (c) in Gegenwart von Wasser und/oder anderen Treibmitteln (d), Katalysatoren (e) und gegebenenfalls weiteren Hilfsund Zusatzstoffen (f).

Die Herstellung von Polyurethanschaumstoffen durch Umsetzung von organischen und/oder modifizierten organischen Polyisocyanaten bzw. Prepolymeren mit höher funktionellen Verbindungen mit mindestens zwei reaktiven Wasserstoffatomen, beispielsweise Polyoxyalkylenpolyaminen und/oder vorzugsweise organischen Polyhydroxylverbindungen, insbesondere Polyetherolen, mit Molekulargewichten von 300 bis 6000, und gegebenenfalls Kettenverlängerungs- und/oder Vernetzungsmitteln mit Molekulargewichten bis ca. 400 in Gegenwart von Katalysatoren, Treibmitteln, Flammschutzmitteln, Hilfsmitteln und/oder Zusatzstoffen ist bekannt und wurde vielfach beschrieben. Eine zusammenfassende Übersicht über die Herstellung von Polyurethanschaumstoffen wird z.B. im Kunststoff-Handbuch, Band VII, "Polyurethane", 1. Auflage 1966, herausgegeben von Dr. R. Vieweg und Dr. A. Höchtlen sowie 2. Auflage, 1983, und 3. Auflage, 1993, jeweils herausgegeben von Dr. G. Oertel (Carl Hanser Verlag, München) gegeben.

Für die Produktion von Polster- und Liegemöbeln, im Fahrzeugbau sowie bei Anwendungen im medizinischen Bereich ist es häufig wünschenswert, Polyurethanweichschäume auf Basis von Polyesteralkoholen zu verwenden, die bei einer entsprechenden Verarbeitungsbreite eine gute Offenzelligkeit besitzen und flammkaschierbar bzw. hochfrequenzverschweißbar sind. Dies ist im Allgemeinen für Esterschaumstoffe bekannt, die im Kaschierprozess eine Schmelze mit zügigem Viskositätsaufbau bilden.

In EP-A-672696 werden Esterblockschäume beansprucht, wobei ausdrücklich darauf verwiesen wird, dass bei Verwendung von Toluylendiisocyanat (TDI) die Offenzelligkeit des Esterblockschaumes über die Anteile des TDI 65/35 gesteuert werden muss. Dazu ist dann häufig noch eine speziell angepasste Katalyse des Schaumsystems erforderlich. Die Erkenntnis, dass bei TDI-Esterblockschäumen unbedingt T65 mitverwendet werden sollte, um eine entsprechende Offenzelligkeit des Schaumstoffes sicherzustellen, ist bereits in US-A-3806474 ausdrücklich beschrieben worden. Nach EP-A-490035 wird versucht, die Offenzelligkeit der Esterblockschäume durch ein jeweils an die Rezeptur angepasstes Stabilisator/Katalysator-Regime zu erreichen. Insbesondere bei wechselnden Wassergehalten ist die zusätzliche Verwendung von T65 unumgänglich. In US-A-5908871 werden spezielle Silikonstabilisatoren für die Produktion von Esterblockschäumen genannt. Neben der zellstabilisierenden Wirkung müssen diese auch eine Emulgierfähigkeit besitzen. Es werden insbesondere T80 und T65 eingesetzt. In EP-A-579988 werden Esterblockschäume beschrieben, die mittels Flammkaschierung laminiert werden. Es handelt sich dabei vorwiegend um Schäume auf Basis von T80 und T65. Nach EP-A-906926 werden Esterblockschäume beansprucht. Für die genannten Schäume auf Basis von Methylendiisocyanaten (MDI) wird durch Verwendung spezieller Prepolymere und angepasster Stabilisatoren eine gute Verarbeitungsbreite realisiert. In EP-A-903360 und EP-A-1035146 werden hydrophile Esterblockschäume geschützt. Bevorzugte Isocyanate sind T80 und T65. Über Anteile eines ethylenoxidhaltigen Polyetherols (bis zu 80 Teile) wird die Hydrophilie des Schaumes eingestellt. Nach DE-A-19735488 werden bei MDI-Esterblockschäumen spezielle Prepolymere in Verbindung mit geeigneten Silikonstabilisatoren angewendet.

Nach GB-A-2312901 werden hochfrequenzverschweißbare Schäume geschützt, die einen zugesetzten Radiofrequenzrezeptor aufweisen. Bei den Esterblockschäumen werden Polymerpolyole verwendet, um bei T80 in einem engen Verarbeitungsbereich eine Zellöffnung zu erreichen. Neben T80 wird im Gemisch mit T65 gearbeitet.

Um die Probleme der Verarbeitung von Esterblockschäumen zu umgehen, sind in DE-A-4236767 Etherblockschäume beschrieben, denen Esterschaumstoff in gemahlener Form zugesetzt worden ist. Die zugesetzten Anteile sollen ausreichen, um eine Flammkaschierbarkeit sicherzustellen.

In US-A-5552449 werden Weichschäume auf Basis von Polyethern oder Polyestern beschrieben, denen anteilig Polyesterole bzw. Polyetherole zugesetzt werden, wodurch eine verringerte Härte dieser Schäume gegenüber reinen Polyurethanschäumen auf Basis von Polyetherolen bzw. Polyesterolen erzielt werden sollte. Über die verwendete TDI-Zusammensetzung werden keine näheren Angaben gemacht. Nach DE-A-19624876 soll auch mit speziellen Polyetherschaumstoffen, die unter Diolzusatz hergestellt werden, eine Flammkaschierfähigkeit erreicht werden. In DD 202622 werden Esterschäume auf TDI-Basis beansprucht, die nachfolgend noch mit einem Prepolymer getränkt werden. Die Isomerenzusammensetzung des TDI ist nicht näher eingegrenzt. In analoger Weise wird bei DD 150443 verfahren. Der Esterblockschaum wird in diesem Falle flammkaschiert.

In US-A-3488300 wird ein reiner Esterschaum beschrieben, bei dem eine Zellöffnung über eine Steuerung des Verschäumungsdruckes erreicht werden soll. DE-A-2321142 beschreibt Esterschäume, die bei sehr niedrigen Indizes zu verarbeiten sind. Neben T80 wird ausdrücklich auch T65 verwendet. In US-A-3806474 wird nachdrücklich aufgezeigt, dass bei Verwendung von T80 geschlossenzellige Esterweichschäume erhalten werden. Die Verwendung von T65 ist erforderlich, um einen entsprechenden Verarbeitungsbereich zu erhalten. Um retikulierte Esterblockschäume zu erhalten, werden in US-A-3748288 Polyetherolbestandteile und ein entschäumend wirkendes Silikon hinzugesetzt, dessen Anteile jedoch schwer zu steuern sind. Nach US-A-4349662 werden der Esterpolyolkomponente in bestimmten Anteilen Polyethylenglykole zugesetzt, um eine bessere Verarbeitbarkeit zu realisieren.

Die im Stand der Technik aufgeführten Erfindungen gestatten durchaus die Herstellung von Polyurethanweichschaumstoffen mit guter Offenzelligkeit, wobei es bei dieser Stoffklasse noch ein beachtliches Verbesserungspotential im Hinblick auf die Eigenschaften und die Verarbeitbarkeit gibt. Problematisch ist jedoch die Herstellung offenzelliger Esterschäume ohne Verwendung von TDI (65/35).

Der Erfindung lag deshalb die Aufgabe zugrunde, leicht zu verarbeitende Polyurethanweichschaumstoffe auf Basis von Polyesteralkoholen unter Verwendung sowohl von TDI, insbesondere unter ausschließlicher Verwendung von T80, als auch von MDI, zu erzeugen, die flammkaschierbar oder hochfrequenzverschweißbar sind.

Diese Aufgabe wurde überraschenderweise dadurch gelöst, dass zur Herstellung der Polyurethanweichschaumstoffe ein Polyolgemisch (b) eingesetzt wird, das aus mindestens einem mindestens zweifunktionellen Polyesterol auf der Basis von Adipinsäure und mehrfunktionellen Alkoholen mit einer OH-Zahl von 40 bis 100 mg KOH/g in Anteilen von mehr als 50 Gew.-% (b1), mindestens einem mindestens zweifunktionellen Polyetherol auf der Basis von Propylenoxid und/oder Butylenoxid bei einer OH-Zahl von größer als 25 mg KOH/g in Anteilen von weniger als 25 Gew.-% (b2) und gegebenenfalls mindestens einem weiteren Polyetherol auf der Basis von Ethylenoxid und Propylenoxid und/oder Butylenoxid mit einem Anteil an primären OH-Gruppen von mehr als 30 % in Anteilen von 0 bis 25 Gew.-% (b3), jeweils bezogen auf das Gesamtgewicht der Komponente b), besteht.

Gegenstand der Erfindung ist somit ein Verfahren zur Herstellung von Polyurethanweichschaumstoffen durch Umsetzung von organischen und/oder modifizierten organischen Polyisocyanaten (a) mit einem Polyolgemisch (b) und gegebenenfalls weiteren gegenüber Isocyanaten reaktive Wasserstoffatome aufweisenden Verbindungen (c) in Gegenwart von Wasser und/oder anderen Treibmitteln (d), Katalysatoren (e) und gegebenenfalls weiteren Hilfs- und Zusatzstoffen (f), das dadurch gekennzeichnet ist, dass das Polyolgemisch (b) besteht aus
b1) mindestens einem mindestens zweifunktionellen Polyesterol auf der Basis von Adipinsäure und mehrfunktionellen Alkoholen mit einer OH-Zahl von 40 bis 100 mg KOH/g in Anteilen von mehr als 50 Gew.-%, bezogen auf das Gesamtgewicht der Komponente b),
b2) mindestens einem mindestens zweifunktionellen Polyetherol auf der Basis von Propylenoxid und/oder Butylenoxid bei einer OH-Zahl von größer als 25 mg KOH/g in Anteilen von weniger als 25 Gew.-%, bezogen auf das Gesamtgewicht der Komponente b),
und gegebenenfalls
b3) mindestens einem weiteren Polyetherol auf der Basis von Ethylenoxid und Propylenoxid und/oder Butylenoxid mit einem Anteil an primären OH-Gruppen von mehr als 30 % in Anteilen von 0 bis 25 Gew.-%, bezogen auf das Gesamtgewicht der Komponente b).

Gegenstände der Erfindung sind weiterhin die nach diesem Verfahren hergestellten Polyurethanweichschaumstoffe selbst sowie deren Verwendung für Polsterzwecke, im Fahrzeugbau und im medizinischen Bereich, insbesondere zur Herstellung von flammkaschierbaren oder hochfrequenzverschweißbaren Verbundstoffen.

Wir fanden bei unseren Untersuchungen überraschenderweise, dass durch den Einsatz der erfindungsgemäßen Kombination der Polyole (b) ein Weichschaum resultiert, der auch bei Verwendung von TDI (80/20) eine hervorragende Offenzelligkeit ergibt und bei Anwesenheit der erfindungsgemäßen Polyole sein Schmelzverhalten beibehält und der deshalb nach üblichen Verfahren flammkaschierbar und hochfrequenzverschweißbar ist. Der Fachmann hätte eigentlich erwarten müssen, dass bei Anwesenheit der Polyetherbestandteile völlig geschlossenzellige Weichschäume bei Verwendung von TDI (80/20) resultieren.

Zu den erfindungsgemäß im Polyolgemisch eingesetzten Komponenten ist Folgendes auszuführen:

Der Bestandteil (b1) besteht aus mindestens einem mindestens zweifunktionellen Polyesterol auf der Basis von Adipinsäure und mehrfunktionellen Alkoholen mit einer OH-Zahl von 40 bis 100 mg KOH/g, vorzugsweise von 40 bis 70 mg KOH/g.

Beispielsweise kommen als (b1) hierfür in Betracht: Polyesterole, basierend auf Adipinsäure und Diethylenglykol, Adipinsäure, Diethylenglykol und Trimethylolpropan, Adipinsäure, Ethylenglykol, Diethylenglykol und Trimethylolpropan. Vorteilhafterweise wird mindestens ein mindestens zweifunktioneller Polyesteralkohol auf der Basis von Adipinsäure, Diethylenglykol und Trimethylolpropan eingesetzt.

Die Polyesterole der Komponente (b1) werden nach üblichen Verfahren, wie sie beispielsweise weiter unten beschrieben sind, hergestellt.

Der Bestandteil (b2) besteht aus mindestens einem mindestens zweifunktionellen, vorzugsweise zwei- bis dreifunktionellen, Polyetherol auf der Basis von Propylenoxid und/oder Butylenoxid bei einer OH-Zahl von größer als 25 mg KOH/g, vorzugsweise von 40 bis 150 mg KOH/g.

Beispielsweise kommen als (b2) hierfür in Betracht: Polyetherole, basierend auf Propylenglykol, Ethylenglykol oder Glycerin als Starter. Vorzugsweise werden Polypropylenglykole auf Basis von Propylenglykol als Starter eingesetzt.

Neben den beschriebenen Polyetherolen der Komponente (b2) können gegebenenfalls weitere Polyetherole auf der Basis von Ethylenoxid und Propylenoxid und/oder Butylenoxid mit einem Anteil an primären OH-Gruppen von mehr als 30 % (b3) in dem erfindungsgemäß eingesetzten Polyolgemisch (b) mitverwendet werden.

Hierfür kommen beispielsweise in Betracht: Polyetherpolyole mit Glycerin, Trimethylolpropan oder Pentaerythrit als Starter mit einem Ethoxylierungsanteil größer als 30 Gew.-%.

Die genannten Polyetherole der Komponenten (b2) und (b3) werden nach bekannten Verfahren, wie sie beispielsweise weiter unten beschrieben sind, hergestellt.

Erfindungsgemäß besteht das Polyolgemisch (b) aus mehr als 50 Gew.-%, vorzugsweise mehr als 55 Gew.-%, der Komponente (b1), weniger als 25 Gew.-%, vorzugsweise weniger als 20 Gew.-%, der Komponente (b2) und weniger als 25 Gew.-%, vorzugsweise 0 bis 22 Gew.-%, der Komponente (b3).

Die erfindungsgemäßen Polyurethanweichschaumstoffe werden durch Umsetzung von organischen und/oder modifizierten organischen Polyisocyanaten (a) mit dem oben beschriebenen Polyolgemisch (b) und gegebenenfalls weiteren gegenüber Isocyanaten reaktive Wasserstoffatome aufweisenden Verbindungen (c) in Gegenwart von Wasser und/oder anderen Treibmitteln (d), Katalysatoren (e) und gegebenenfalls weiteren Hilfs- und Zusatzstoffen (f) hergestellt.

Zu den verwendbaren weiteren Ausgangskomponenten ist im Einzelnen folgendes auszuführen:

Als organische Polyisocyanate (a) zur Herstellung der erfindungsgemäßen Polyurethane kommen die an sich bekannten aliphatischen, cycloaliphatischen, araliphatischen und vorzugsweise aromatischen mehrwertigen Isocyanate in Frage.

Im Einzelnen seien beispielhaft genannt: Alkylendiisocyanate mit 4 bis 12 Kohlenstoffatomen im Alkylenrest, wie 1,12-Dodecandiisocyanat, 2-Ethyl-tetramethylendiisocyanat-1,4, 2-Methylpentamethylendiisocyanat-1,5, Tetramethylendiisocyanat-1,4 und vorzugsweise Hexamethylendiisocyanat-1,6; cycloaliphatische Diisocyanate, wie Cyclohexan-1,3- und-1,4-diisocyanat sowie beliebige Gemische dieser Isomeren, 1-Isocyanato-3,3,5-trimethyl-5-isocyanatomethylcyclohexan (IPDI), 2,4- und 2,6-Hexahydrotoluylendiisocyanat sowie die entsprechenden Isomerengemische, 4,4'-, 2,2'- und 2,4'-Dicyclohexylmethandiisocyanat sowie die entsprechenden Isomerengemische, und vorzugsweise aromatische Diund Polyisocyanate, wie z.B. 2,4- und 2,6-Toluylendiisocyanat und die entsprechenden Isomerengemische, 4,4'-, 2,4'- und 2,2'-Diphenylmethandiisocyanat und die entsprechenden Isomerengemische, Mischungen aus 4,4'- und 2,2'-Diphenylmethandiisocyanaten, Polyphenylpolymethylenpolyisocyanate, Mischungen aus 4,4'-, 2,4'- und 2,2'-Diphenylmethandiisocyanaten und Polyphenylpolymethylenpolyisocyanaten (Roh-MDI) und Mischungen aus Roh-MDI und Toluylendiisocyanaten. Die organischen Di- und Polyisocyanate können einzeln oder in Form ihrer Mischungen eingesetzt werden.

Bevorzugt verwendet werden Toluylendiisocyanat, Gemische aus Diphenylmethandiisocyanat-Isomeren, Gemische aus Diphenylmethandiisocyanat und Roh-MDI oder Toluylendiisocyanat mit Diphenylmethandiisocyanat und/oder Roh-MDI. Besonders bevorzugt ist der Einsatz von TDI (80/20).

Einsetzbar sind auch sogenannte modifizierte mehrwertige Isocyanate, d.h. Produkte, die durch chemische Umsetzung organischer Di- und/oder Polyisocyanate erhalten werden. Beispielhaft genannt seien Ester-, Harnstoff-, Biuret-, Allophanat-, Carbodiimid-, Isocyanurat-, Uretdion- und/oder Urethangruppen enthaltende Diund/oder Polyisocyanate. Im Einzelnen kommen beispielsweise in Betracht: Urethangruppen enthaltende organische, vorzugsweise aromatische, Polyisocyanate mit NCO-Gehalten von 43 bis 15 Gew.-%, vorzugsweise von 31 bis 21 Gew.-%, bezogen auf das Gesamtgewicht, durch Umsetzung beispielsweise mit niedermolekularen Diolen, Triolen, Dialkylenglykolen, Trialkylenglykolen oder Polyoxyalkylenglykolen mit Molekulargewichten bis 6000, insbesondere mit Molekulargewichten bis 1500, modifiziertes 4,4'-Diphenylmethandiisocyanat, modifizierte 4,4'- und 2,4'-Diphenylmethandiisocyanatmischungen oder modifiziertes Roh-MDI oder 2,4- bzw. 2,6-Toluylendiisocyanat. Die Di- bzw. Polyoxyalkylenglykole können dabei einzeln oder als Gemische eingesetzt werden, beispielsweise genannt seien: Diethylen-, Dipropylenglykol, Polyoxyethylen-, Polyoxypropylen- und Polyoxypropylenpolyoxyethenglykole, -triole und/oder -tetrole. Geeignet sind auch NCO-Gruppen enthaltende Prepolymere mit NCO-Gehalten von 25 bis 3,5 Gew.-%, vorzugsweise von 21 bis 14 Gew.-%, bezogen auf das Gesamtgewicht, hergestellt aus den nachfolgend beschriebenen Polyester- und/oder vorzugsweise Polyetherpolyolen und 4,4'-Diphenylmethandiisocyanat, Mischungen aus 2,4'- und 4,4'-Diphenylmethandiisocyanat, 2,4- und/oder 2,6-Toluylendiisocyanaten oder Roh-MDI. Bewährt haben sich ferner flüssige, Carbodiimidgruppen und/oder Isocyanuratringe enthaltende Polyisocyanate mit NCO-Gehalten von 43 bis 15, vorzugsweise 31 bis 21 Gew.-%, bezogen auf das Gesamtgewicht, z.B. auf Basis von 4,4'-, 2,4'und/oder 2,2'-Diphenylmethandiisocyanat und/oder 2,4- und/oder 2,6-Toluylendiisocyanat. Die modifizierten Polyisocyanate können miteinander oder mit unmodifizierten organischen Polyisocyanaten wie z.B. 2,4'-, 4,4'-Diphenylmethandiisocyanat, Roh-MDI, 2,4-und/oder 2,6-Toluylendiisocyanat gemischt werden. Besonders bewährt haben sich als modifizierte organische Polyisocyanate NCO-gruppenhaltige Prepolymere, die vorteilhafterweise gebildet werden aus der Reaktion der Isocyanate (a) mit den Polyolen (b) sowie gegebenenfalls Verbindungen der Komponenten (c) und/oder (d) .

Neben dem oben beschriebenen erfindungsgemäß eingesetzten Polyolgemisch (b) werden gegebenenfalls weitere gegenüber Isocyanaten reaktive Wasserstoffatome aufweisende Verbindungen (c) zugegeben.

Hierfür kommen vorrangig Verbindungen mit mindestens zwei reaktiven Wasserstoffatomen in Frage. Dabei werden zweckmäßigerweise solche mit einer Funktionalität von 2 bis 8, vorzugsweise 2 bis 3, und einem mittleren Molekulargewicht von 300 bis 8000, vorzugsweise von 300 bis 5000, verwendet. Die Hydroxylzahl der Polyhydroxylverbindungen beträgt dabei in aller Regel 20 bis 100 und vorzugsweise 30 bis 70.

Die in den Komponenten (b) und (c) verwendeten Polyesterpolyole können beispielsweise aus organischen Dicarbonsäuren mit 2 bis 12 Kohlenstoffatomen, vorzugsweise aliphatischen Dicarbonsäuren mit 4 bis 6 Kohlenstoffatomen, mehrwertigen Alkoholen, vorzugsweise Diolen, mit 2 bis 12 Kohlenstoffatomen, vorzugsweise 2 bis 6 Kohlenstoffatomen hergestellt werden. Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure und Terephthalsäure. Die Dicarbonsäuren können dabei sowohl einzeln als auch im Gemisch untereinander verwendet werden. Anstelle der freien Dicarbonsäuren können auch die entsprechend Dicarbonsäurederivate, wie z.B. Dicarbonsäureester von Alkoholen mit 1 bis 4 Kohlenstoffatomen oder Dicarbonsäureanhydriden eingesetzt werden. Vorzugsweise verwendet werden Dicarbonsäuregemische aus Bernstein-, Glutar- und Adipinsäure in Mengenverhältnissen von beispielsweise 20 bis 35 : 35 bis 50 : 20 bis 32 Gew.-Teilen, und insbesondere Adipinsäure. Beispiele für zwei- und mehrwertige Alkohole, insbesondere Diole sind: Ethandiol, Diethylenglykol, 1,2- bzw. 1,3-Propandiol, Dipropylenglykol, 1,4-Butandiol, 1,5-Pentandiol, 1,6-Hexandiol, 1,10-Decandiol, Glycerin und Trimethylolpropan. Vorzugsweise verwendet werden Ethandiol, Diethylenglykol, 1,4-Butandiol, 1,5-Pentandiol und 1,6-Hexandiol. Eingesetzt werden können ferner Polyesterpolyole aus Lactonen, z.B. ε-Caprolacton oder Hydroxycarbonsäuren, z.B. ω-Hydroxycapronsäure. Zur Herstellung der Polyesterpolyole können die organischen, z.B. aromatischen und vorzugsweise aliphatischen, Polycarbonsäuren und/oder -derivate und mehrwertigen Alkohole katalysatorfrei oder vorzugsweise in Gegenwart von Veresterungskatalysatoren, zweckmäßigerweise in einer Atmosphäre aus Inertgas, wie z.B. Stickstoff, Kohlenmonoxid, Helium, Argon u.a., in der Schmelze bei Temperaturen von 150 bis 250°C, vorzugsweise 180 bis 220°C, gegebenenfalls unter vermindertem Druck bis zu der gewünschten Säurezahl, die vorteilhafterweise kleiner als 10, vorzugsweise kleiner als 2 ist, polykondensiert werden. Nach einer bevorzugten Ausführungsform wird das Veresterungsgemisch bei den obengenannten Temperaturen bis zu einer Säurezahl von 80 bis 30, vorzugsweise 40 bis 30, unter Normaldruck und anschließend unter einem Druck von kleiner als 500 mbar, vorzugsweise 50 bis 150 mbar, polykondensiert. Als Veresterungskatalysatoren kommen beispielsweise Eisen-, Cadmium-, Koballt-, Blei-, Zink-, Antimon-, Magnesium-, Titan- und Zinnkatalysatoren in Form von Metallen, Metalloxiden oder Metallsalzen in Betracht. Die Polykondensation kann jedoch auch in flüssiger Phase in Gegenwart von Verdünnungs- und/oder Schleppmitteln, wie z.B. Benzol, Toluol, Xylol oder Chlorbenzol, zur azeotropen Abdestillation des Kondensationswassers durchgeführt werden. Zur Herstellung der Polyesterpolyole werden die organischen Polycarbonsäuren und/oder -derivate und mehrwertigen Alkohole vorteilhafterweise im Molverhältnis von 1:1 bis 1,8 vorzugsweise 1:1,05 bis 1,2 polykondensiert. Die erhaltenen Polyesterpolyole besitzen vorzugsweise eine Funktionalität von 2 bis 4, insbesondere 2 bis 3, und ein Molekulargewicht von 480 bis 3000, insbesondere 600 bis 2000.

Die in den Komponenten (b) und (c) verwendeten Polyetherpolyole werden nach bekannten Verfahren, beispielsweise durch anionische Polymerisation mit Alkalihydroxiden, wie z.B. Natrium- oder Kaliumhydroxid oder Alkalialkoholaten, wie z.B. Natriummethylat, Natrium- oder Kaliumethylat oder Kaliumisopropylat als Katalysatoren und unter Zusatz mindestens eines Startermoleküls, das 2 bis 8, vorzugsweise 2 bis 3, reaktive Wasserstoffatome gebunden enthält, oder durch kationische Polymerisation mit Lewisssäuren, wie Antimonpentachlorid, Borfluorid-Etherat u.a., oder Bleicherde als Katalysatoren oder durch Doppelmetallcyanidkatalyse aus einem oder mehreren Alkylenoxiden mit 2 bis 4 Kohlenstoffatomen im Alkylenrest hergestellt. Für spezielle Einsatzzwecke können auch monofunktionelle Starter in den Polyetheraufbau eingebunden werden. Geeignete Alkylenoxide sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden. Als Startermoleküle kommen beispielsweise in Betracht: Wasser, organische Dicarbonsäuren, wie Bernsteinsäure, Adipinsäure, Phthalsäure und Terephthalsäure, aliphatische und aromatische, gegebenenfalls N-mono-, N,N- und N,N'-dialkylsubstituierte Diamine mit 1 bis 4 Kohlenstoffatomen im Alkylrest, wie gegebenenfalls mono- und dialkylsubstituiertes Ethylendiamin, Diethylentriamin, Triethylentetramin, 1,3-Propylendiamin, 1,3- bzw. 1,4-Butylendiamin, 1,2-, 1,3-, 1,4-, 1,5- und 1,6-Hexamethylendiamin, Phenylendiamin, 2,3-, 2,4- und 2,6-Toluylendiamin und 4,4'-, 2,4'- und 2,2'-Diaminodiphenylmethan. Als Startermoleküle kommen ferner in Betracht: Alkanolamine, wie z.B. Ethanolamin, N-Methyl- und N-Ethylethanolamin, Dialkanolamine, wie z.B. Diethanolamin, N-Methyl- und N-Ethyldiethanolamin, und Trialkanolamine, wie z.B. Triethanolamin, und Ammoniak. Vorzugsweise verwendet werden mehrwertige, insbesondere zwei- und/oder dreiwertige Alkohole, wie Ethandiol, Propandiol-1,2 und -2,3, Diethylenglykol, Dipropylenglykol, Butandiol-1,4, Hexandiol-1,6, Glycerin, Trimethylolpropan, Pentaerythrit. Die Polyetherpolyole, vorzugsweise Polyoxypropylen- und Polyoxypropylenpolyoxyethylenpolyole, besitzen eine Funktionalität von vorzugsweise 2 bis 8 und insbesondere 2 bis 3 und Molekulargewichte von 300 bis 8000, vorzugsweise 300 bis 6000 und insbesondere 1000 bis 5000 und geeignete Polyoxytetramethylenglykole ein Molekulargewicht bis ungefähr 3500.

Als Polyetherpolyole eignen sich ferner polymermodifizierte Polyetherpolyole, vorzugsweise Pfropfpolyetherpolyole, insbesondere solche auf Styrol- und/oder Acrylnitrilbasis, die durch in situ Polymerisation von Acrylnitril, Styrol oder vorzugsweise Mischungen aus Styrol und Acrylnitril, z.B. im Gewichtsverhältnis 90:10 bis 10:90, vorzugsweise 70:30 bis 30:70, zweckmäßigerweise in den vorgenannten Polyetherpolyolen analog den Angaben der deutschen Patentschriften 1111394, 1222669 (US 3304273, 3383351, 3523093), 1152536 (GB 1040452) und 1152537 (GB 987618) hergestellt werden, sowie Polyetherpolyoldispersionen, die als disperse Phase, üblicherweise in einer Menge von 1 bis 50 Gew.-%, vorzugsweise 2 bis 25 Gew.-%, enthalten: z.B. Polyharnstoffe, Polyhydrazide, tert.-Aminogruppen gebunden enthaltende Polyurethane und/oder Melamin und die z.B. beschrieben werden in EP-B-011752 (US 4304708), US-A-4374209 und DE-A-3231497.

Die Polyester- und Polyetherpolyole können einzeln oder in Form von beliebigen Mischungen verwendet werden.

Neben den beschriebenen Polyester- und Polyetherolen können beispielsweise auch Polyetherpolyamine und/oder weitere Polyole, ausgewählt aus der Gruppe der Polythioetherpolyole, Polyesteramide, hydroxylgruppenhaltigen Polyacetale und hydroxylgruppenhaltigen aliphatischen Polycarbonate oder Mischungen aus mindestens zwei der genannten Polyole verwendet werden. Die Hydroxylzahl der Polyhydroxylverbindungen beträgt dabei in aller Regel 20 bis 80 und vorzugsweise 28 bis 56.

Als hydroxylgruppenhaltige Polyacetale kommen z.B. die aus Glykolen, wie Diethylenglykol, Triethylenglykol, 4,4'-Dihydroxyethoxydiphenyldimethylmethan, Hexandiol und Formaldehyd herstellbaren Verbindungen in Frage. Auch durch Polymerisation cyclischer Acetale lassen sich geeignete Polyacetale herstellen. Als Hydroxylgruppen aufweisende Polycarbonate kommen solche der an sich bekannten Art in Betracht, die beispielsweise durch Umsetzung von Diolen, wie Propandiol-1,3, Butandiol-1,4 und/oder Hexandiol-1,6, Diethylenglykol, Triethylenglykol oder Tetraethylenglykol mit Diarylcarbonaten, z.B. Diphenylcarbonat, oder Phosgen hergestellt werden können. Zu den Polyesteramiden zählen z.B. die aus mehrwertigen, gesättigten und/oder ungesättigten Carbonsäuren bzw. deren Anhydriden und mehrwertigen gesättigten und/oder ungesättigten Aminoalkoholen oder Mischungen aus mehrwertigen Alkoholen und Aminoalkoholen und/oder Polyaminen gewonnenen, vorwiegend linearen Kondensate. Geeignete Polyetherpolyamine können aus den obengenannten Polyetherpolyolen nach bekannten Verfahren hergestellt werden. Beispielhaft genannt seien die Cyanoalkylierung von Polyoxyalkylenpolyolen und anschließende Hydrierung des gebildeten Nitrils (US-A-3267050) oder die teilweise oder vollständige Aminierung von Polyoxyalkylenpolyolen mit Aminen oder Ammoniak in Gegenwart von Wasserstoff und Katalysatoren (DE-A-1215373).

Die Polyurethanweichschaumstoffe können ohne oder unter Mitverwendung von Kettenverlängerungs- und/oder Vernetzungsmitteln hergestellt werden, wobei diese in der Regel aber nicht erforderlich sind. Als Kettenverlängerungs- und/oder Vernetzungsmittel verwendet werden Diole und/oder Triole mit Molekulargewichten kleiner als 400, vorzugsweise 60 bis 300. In Betracht kommen beispielsweise aliphatische, cycloaliphatische und/oder araliphatische Diole mit 2 bis 14, vorzugsweise 4 bis 10 Kohlenstoffatomen, wie z.B. Ethylenglykol, Propandiol-1,3, Decandiol-1,10, o-, m-, p-Dihydroxycyclohexan, Diethylenglykol, Dipropylenglykol und vorzugsweise Butandiol-1,4, Hexandiol-1,6 und Bis-(2-hydroxyethyl)-hydrochinon, Triole, wie 1,2,4- und 1,3,5-Trihydroxycyclohexan, Triethanolamin, Diethanolamin, Glycerin und Trimethylolpropan und niedermolekulare hydroxylgruppenhaltige Polyalkylenoxide auf Basis Ethylen- und/oder 1,2-Propylenoxid und den vorgenannten Diolen und/oder Triolen als Startermoleküle.

Sofern zur Herstellung der Polyurethanschaumstoffe Kettenverlängerungsmittel, Vernetzungsmittel oder Mischungen davon Anwendung finden, kommen diese zweckmäßigerweise in einer Menge bis zu 10 Gew.-%, bezogen auf das Gewicht der Polyolverbindungen, zum Einsatz.

Die Verbindungen der Komponente (c) können einzeln oder in Form von Mischungen verwendet werden.

Als Treibmittel (d) können die aus der Polyurethanchemie allgemein bekannten Fluorchlorkohlenwasserstoffe (FCKW) sowie hochund/oder perfluorierte Kohlenwasserstoffe verwendet werden. Der Einsatz dieser Stoffe wird jedoch aus ökologischen Gründen stark eingeschränkt bzw. ganz eingestellt. Neben HFCKW und HFKW bieten sich insbesondere aliphatische und/oder cycloaliphatische Kohlenwasserstoffe, insbesondere Pentan und Cyclopentan oder Acetale, wie z.B. Methylal, als Alternativtreibmittel an. Diese physikalischen Treibmittel werden üblicherweise der Polyolkomponente des Systems zugesetzt. Sie können jedoch auch in der Isocyanatkomponente oder als Kombination sowohl der Polyolkomponente als auch der Isocyanatkomponente zugesetzt werden. Möglich ist auch ihre Verwendung zusammen mit hoch- und/oder perfluorierten Kohlenwasserstoffen, in Form einer Emulsion der Polyolkomponente. Als Emulgatoren, sofern sie Anwendung finden, werden üblicherweise oligomere Acrylate eingesetzt, die als Seitengruppen Polyoxyalkylen- und Fluoralkanreste gebunden enthalten und einen Fluorgehalt von ungefähr 5 bis 30 Gew.-% aufweisen. Derartige Produkte sind aus der Kunststoffchemie hinreichend bekannt, z.B. EP-A-0351614. Die eingesetzte Menge des Treibmittels bzw. der Treibmittelmischung liegt dabei bei 1 bis 25 Gew.-%, vorzugsweise 1 bis 15 Gew.-%, jeweils bezogen auf das Gesamtgewicht der Komponenten (b) bis (d).

Weiterhin ist es möglich und üblich, als Treibmittel der Polyolkomponente Wasser in einer Menge von 0,5 bis 15 Gew.-%, vorzugsweise 1 bis 5 Gew.-%, bezogen auf das Gesamtgewicht der Komponenten (b) bis (f), zuzusetzen. Der Wasserzusatz kann in Kombination mit dem Einsatz der anderen beschriebenen Treibmittel erfolgen.

Vorzugsweise wird im Sinne der Erfindung Wasser als Treibmittel benutzt.

Als Katalysatoren (e) zur Herstellung der Polyurethanweichschaumstoffe werden insbesondere Verbindungen verwendet, die die Reaktion der reaktiven Wasserstoffatome, insbesondere hydroxylgruppenenthaltender Verbindungen der Komponenten (b), (c) und (d), mit den organischen, gegebenenfalls modifizierten Polyisocyanaten (a) stark beschleunigen. In Betracht kommen organische Metallverbindungen, vorzugsweise organische Zinnverbindungen, wie Zinn-(II)-salze von organischen Carbonsäuren, z.B. Zinn-(II)-acetat, Zinn-(II)-octoat, Zinn-(II)-ethylhexoat und Zinn-(II)-laurat, und die Dialkylzinn-(IV)-salze von organischen Carbonsäuren, z.B. Dibutylzinndiacetat, Dibutylzinndilaurat, Dibutylzinnmaleat und Dioctylzinndiacetat. Die organischen Metallverbindungen werden allein oder vorzugsweise in Kombination mit stark basischen Aminen eingesetzt. Genannt seien beispielsweise Amidine, wie 2,3-Dimethyl-3,4,5,6-tetrahydropyrimidin, tertiäre Amine, wie Triethylamin, Tributylamin, Dimethylbenzylamin, N-Methyl-, N-Ethyl-, N-Cyclohexylmorpholin, N,N,N',N'-Tetramethylethylendiamin, N,N,N',N'-Tetramethylbutandiamin, N,N,N',N'-Tetramethylhexandiamin-1,6, Pentamethyldiethylentriamin, Tetramethyldiaminoethylether, Bis-(dimethylaminopropyl)-harnstoff, Dimethylpiperazin, 1,2-Dimethylimidazol, 1-Aza-bicyclo-(3,3,0)-octan und vorzugsweise 1,4-Diazabicyclo-(2,2,2)-octan, und Aminoalkanolverbindungen, wie Triethanolamin, Triisopropanolamin, N-Methyl- und N-Ethyldiethanolamin und Dimethylethanolamin.

Als Katalysatoren kommen ferner in Betracht: Tris-(dialkylaminoalkyl)-s-hexahydrotriazine, insbesondere Tris-(N,N-dimethylaminopropyl)-s-hexahydrotriazin, Tetraalkylammoniumhydroxide, wie Tetramethylammoniumhydroxid, Alkalihydroxid, wie Natriumhydroxid, und Alkalialkoholate, wie Natriummethylat und Kaliumisopropylat, sowie Alkalisalze von langkettigen Fettsäuren mit 10 bis 20 C-Atomen und gegebenenfalls seitenständigen OH-Gruppen. Vorzugsweise verwendet werden 0,001 bis 5 Gew.-%, insbesondere 0,05 bis 2 Gew.-% Katalysator bzw. Katalysatorkombination, bezogen auf das Gewicht der Aufbaukomponente (b) bis (f).

Der Reaktionsmischung zur Herstellung der erfindungsgemäßen Polyurethanweichschaumstoffe können gegebenenfalls noch weitere Hilfsmittel und/oder Zusatzstoffe (f) einverleibt werden. Genannt seien beispielsweise Flammschutzmittel, Stabilisatoren, Füllstoffe, Farbstoffe, Pigmente und Hydrolyseschutzmittel sowie fungistatische und bakteriostatisch wirkende Substanzen.

Geeignete Flammschutzmittel sind beispielsweise Trikresylphosphat, Tris-(2-chlorethyl)phosphat, Tris-(2-chlorpropyl)-phosphat, Tetrakis-(2-chlorethyl)-ethylendi-phosphat, Dimethylmethanphosphonat, Diethanolaminomethylphosphonsäurediethylester sowie handelsübliche halogenhaltige Flammschutzpolyole. Außer den bereits genannten halogensubstituierten Phosphaten können auch anorganische oder organische Flammschutzmittel, wie roter Phosphor, Aliumiumoxidhydrat, Antimontrioxid, Arsenoxid, Ammoniumpolyphosphat und Calciumsulfat, Blähgraphit oder Cyanursäurederivate, wie z.B. Melamin, oder Mischungen aus mindestens zwei Flammschutzmitteln, wie z.B. Ammoniumpolyphosphaten und Melamin sowie gegebenenfalls Maisstärke oder Ammoniumpolyphosphat, Melamin und Blähgraphit und/oder gegebenenfalls aromatische Polyester zum Flammfestmachen der Polyisocyanatpolyadditionsprodukte verwendet werden. Besonders wirksam erweisen sich dabei Zusätze an Melamin. Im Allgemeinen hat es sich als zweckmäßig erwiesen, 5 bis 50 Gew.-Teile, vorzugsweise 5 bis 25 Gew.-Teile, der genannten Flammschutzmittel für jeweils 100 Gew.-Teile der Aufbaukomponenten (b) bis (f) zu verwenden.

Als Stabilisatoren werden insbesondere oberflächenaktive Substanzen, d.h. Verbindungen eingesetzt, welche zur Unterstützung der Homogenisierung der Ausgangsstoffe dienen und gegebenenfalls auch geeignet sind, die Zellstruktur der Kunststoffe zu regulieren. Genannt seien beispielsweise Emulgatoren, wie die Natriumsalze der Ricinusölsulfate oder Fettsäuren sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure und Ricinolsäure; Schaumstabilisatoren, wie Siloxanoxalkylenmischpolymerisate und andere Organopoylsiloxane, oxethylierte Alkylphenole, oxethylierte Fettalkohole, Paraffinöle, Ricinusöl- bzw. Ricinolsäureester, Türkischrotöl und Erdnußöl, und Zellregler, wie Paraffine, Fettalkohole und Dimethylpolysiloxane. Als Stabilisatoren kommen vorwiegend Organopolysiloxane zur Anwendung, die wasserlöslich sind. Dabei handelt es sich um Polydimethylsiloxanreste, an denen eine Polyetherkette aus Ethylenoxid und Propylenoxid angepfropft ist. Die oberflächenaktiven Substanzen werden üblicherweise in Mengen von 0,01 bis 5 Gew.-Teilen, bezogen auf 100 Gew.-Teile der Komponenten (b) bis (f), angewandt.

Als Füllstoffe, insbesondere verstärkend wirkende Füllstoffe, sind die an sich bekannten, üblichen organischen und anorganischen Füllstoffe, Verstärkungsmittel, Beschwerungsmittel, Mittel zur Verbesserung des Abriebverhaltens in Anstrichfarben, Beschichtungsmittel usw. zu verstehen. Im Einzelnen seien beispielhaft genannt: anorganische Füllstoffe, wie silikatische Mineralien, beispielsweise Schichtsilikate, wie Antigorit, Serpentin, Hornblenden, Amphibole, Chrisotil und Talkum, Metalloxide, wie Kaolin, Aluminiumoxide, Titanoxide und Eisenoxide, Metallsalze, wie Kreide, Schwerspat und anorganische Pigmente, wie Cadmiumsulfid und Zinksulfid, sowie Glas u.a.. Vorzugsweise verwendet werden Kaolin (China Clay), Aluminiumsilikat und Copräzipitate aus Bariumsulfat und Aluminiumsilikat sowie natürliche und synthetische faserförmige Mineralien, wie Wollastonit, Metall- und insbesondere Glasfasern verschiedener Länge, die gegebenenfalls geschlichtet sein können. Als organische Füllstoffe kommen beispielsweise in Betracht: Kohle, Kollophonium, Cyclopentadienylharze und Pfropfpolymerisate sowie Cellulosefasern, Polyamid-, Polyacrylnitril-, Polyurethan-, Polyesterfasern auf der Grundlage von aromatischen und/oder aliphatischen Dicarbonsäureestern und insbesondere Kohlenstofffasern. Die anorganischen und organischen Füllstoffe können einzeln oder als Gemische verwendet werden und werden der Reaktionsmischung vorteilhafterweise in Mengen von 0,5 bis 50 Gew.-%, vorzugsweise 1 bis 40 Gew.-%, bezogen auf das Gewicht der Komponenten (a) bis (f), einverleibt, wobei jedoch der Gehalt an Matten, Vliesen und Geweben aus natürlichen und synthetischen Fasern Werte bis 80 erreichen kann.

Nähere Angaben über die oben genannten anderen üblichen Hilfsund Zusatzstoffe sind der Fachliteratur, beispielsweise der Monographie von J. H. Saunders und K. C. Frisch "High Polymers" Band XVI, Polyurethanes, Teil 1 und 2, Verlag Interscience Publishers 1962 bzw. 1964, oder dem oben zitierten Kunststoffhandbuch, Polyurethane, Band VII, Hanser-Verlag München, Wien, 1. bis 3. Auflage, zu entnehmen.

Zur Herstellung der erfindungsgemäßen Schäume werden die organischen und/oder modifizierten organischen Polyisocyanate (a), das Polyolgemisch (b) und gegebenenfalls weiteren gegenüber Isocyanaten reaktive Wasserstoffatome aufweisenden Verbindungen (c) sowie weiteren Bestandteilen (d) bis (f) in solchen Mengen zur Umsetzung gebracht, dass das Äquivalenzverhältnis von NCO-Gruppen der Polyisocyanate (a) zur Summe der reaktiven Wasserstoffatome der Komponenten (b) bis (f) 0,70 bis 1,25 : 1, vorzugsweise 0,90 bis 1,15 : 1, beträgt.

Polyurethanschaumstoffe nach dem erfindungsgemäßen Verfahren werden vorteilhafterweise durch das kontinuierliche Auftragen des Reaktionsgemisches auf geeigneten Bandstraßen zur Erzeugung von Schaumblöcken hergestellt. Als besonders vorteilhaft hat es sich erwiesen, das Isocyanat - insbesondere T80 - mit Polyolen, Wasser, Stabilisator, Katalysator und gegebenenfalls anderen Zusatzstoffen zu vermischen und in einem kontinuierlich arbeitenden Mischkopf auf ein Transportband auszutragen.

Üblich ist auch das Arbeiten nach dem one-shot-Verfahren, beispielsweise mit Hilfe der Hochdruck- oder Niederdruck-Technik in offenen oder geschlossenen Formwerkzeugen, beispielsweise metallischen Formwerkzeugen.

Als besonders vorteilhaft hat es sich erwiesen, nach dem Zweikomponentenverfahren zu arbeiten und die Aufbaukomponenten (b) bis (f) zu einer sogenannten Polyolkomponente, oft auch als Komponente A bezeichnet, zu vereinigen und als Isocyanatkomponente, oft auch als Komponente B bezeichnet, die organischen und/oder modifizierten organischen Polyisocyanate (a), besonders bevorzugt ein NCO-Prepolymer oder Mischungen aus diesem Prepolymeren und weiteren Polyisocyanaten, und gegebenenfalls Treibmittel (d) zu verwenden.

Die Ausgangskomponenten werden bei einer Temperatur von 15 bis 90°C, vorzugsweise von 20 bis 60°C und insbesondere von 20 bis 35°C, gemischt und in das offene oder gegebenenfalls unter erhöhtem Druck in das geschlossene Formwerkzeug eingebracht oder bei einer kontinuierlichen Arbeitsstation auf ein Band, das die Reaktionsmasse aufnimmt, aufgetragen. Die Vermischung kann mechanisch mittels eines Rührers, mittels einer Rührschnecke oder durch eine Hochdruckvermischung in einer Düse durchgeführt werden. Die Formwerkzeugtemperatur beträgt zweckmäßigerweise 20 bis 110°C, vorzugsweise 30 bis 60°C und insbesondere 35 bis 55°C.

Die nach dem erfindungsgemäßen Verfahren hergestellten Polyurethanschaumstoffe weisen eine Dichte von 10 bis 800 kg/m³, vorzugsweise von 30 bis 100 kg/m³ und insbesondere von 30 bis 80 kg/m³ auf.

Besonders eignen sie sich als Polstermaterial im Möbelsitzsektor, im Fahrzeugbau und im medizinischen Bereich. Die so hergestellten Schaumstoffe lassen sich mit üblichen Techniken flammkaschieren und sind hochfrequenzverschweißbar und damit hervorragend zu Verbundstoffen zu verarbeiten.

Die vorliegende Erfindung soll anhand der angeführten Beispiele erläutert werden, ohne jedoch hierdurch eine entsprechende Eingrenzung vorzunehmen.

Ein Polyurethanweichschaum gemäß den in Tabelle 1 angeführten Bestandteilen wird in einem 10,6-1-Karton verschäumt. Die Beispiele 1 und 2 stellen dabei Vergleichsbeispiele dar.

**Tabelle 1**

| Beispiel | 1 | 2 | 3 | 4 | 5 | 6 | 7 | 8 | 9 |
|---|---|---|---|---|---|---|---|---|---|
| Polyol 1 | 92,15 | 82,10 | 84,15 | 84,15 | 84,15 | 76,15 | 76,15 | 76,15 | 58,15 |
| Polyol 2 | - | - | 8 | 8 | 8 | 16 | 16 | 16 | 16 |
| Polyol 3 | - | | - | - | - | - | - | - | 20 |
| Polyol 4 | - | 10,05 | - | - | - | - | - | - | - |
| Lupragen® N 201 | 0,2 | 0,2 | 0,2 | 0,2 | 0,2 | 0,2 | 0,2 | 0,2 | 0,2 |
| Lupragen® N 206 | 0,15 | 0,15 | 0,15 | 0,15 | 0,15 | 0,15 | 0,15 | 0,15 | 0,15 |
| B 8409 | 2,5 | 2,5 | 2,5 | 2,5 | 2,5 | 2,5 | 2,5 | 2,5 | 2,5 |
| Wasser | 3 | 3 | 3 | 3 | 3 | 5 | 5 | 5 | 3 |
| B-Komponente | | | | | | | | | |
| Lupranat® T80 | 100 | 100 | 100 | 100 | 100 | 100 | 100 | 100 | - |
| Lupranat® MI | - | - | - | - | - | - | - | - | 80 |
| Lupranat® M20A | - | - | - | - | - | - | - | - | 20 |
| Kennzahl | 100 | 100 | 90 | 100 | 110 | 90 | 100 | 110 | 95 |
| Rohdichte (kg/m³) | * | ** | 35,2 | 33,8 | 35,6 | 21,8 | 19 | 19 | 53,4 |
| Zugfestigkeit (kPa) | | | 76 | 91 | 82 | 64 | 70 | 67 | 240 |
| Bruchdehnung (%) | | | 165 | 180 | 72 | 151 | 111 | 108 | 195 |
| DVR (%) | | | 4,3 | 4,8 | 8,4 | 25 | 34 | 32 | 14,3 |
| Eindrückharte (N) | | | 194 | 205 | 225 | 145 | 179 | 232 | 672 |
| Stauchhärte (kPa) | | | 3,1 | 3,5 | 3,8 | 2,5 | 2,7 | 3,9 | 9,7 |
| Hysterese (%) | | | 32 | 36 | 32 | 51 | 50 | 52 | 62 |
| Rückprallelastizität | | | 43 | 38 | 43 | 34 | 30 | 34 | 27 |
| (%) | | | | | | | | | |

| | | | | | | | | | |
|---|---|---|---|---|---|---|---|---|---|
| * völlig geschlossenzellig; | | | | | | | | | |
| ** Schaumkollaps; DVR Druckverformungsrest; Polyol 1 - OH-Zahl 61 mg KOH/g, Polyesteralkohol auf Basis von Adipinsäure, Diethylenglykol und Trimethylolpropan (BASF) ; Polyol 2 - OH-Zahl 55 mg KOH/g, Polyetheralkohol auf Basis von Propylenoxid, Starter Propylenglykol (BASF) ; Polyol 3 - OH-Zahl 42 mg KOH/g, Polyetheralkohol auf Basis von Propylen- und Ethylenoxid (73 %), Starter Glycerin, primäre OH-Gruppen 77 % (BASF) ; Polyol 4 - OH-Zahl 48 mg KOH/g, Polyetheralkohol auf Basis von Propylen- und Ethylenoxid, Starter Glycerin (BASF) ; Lupragen® N 206 -Aminkatalysator (BASF) ; Lupragen® N 201 - Aminkatalysator (BASF) ; B 8409 - Silikonstabilisator (Goldschmidt) Lupranat® MI - NCO-Gehalt 33,6 Gew.-%, Isomerengemisch 4,4'-MDI, 2,4'-MDI; Lupranat® M20A - NCO-Gehalt 31,6 Gew.-%, Polyphenylenpolymethylenpolyisocyanat; Lupranat® T80 - NCO-Gehalt 48,3 Gew.-%, Toluylendiisocyanat (80/20). | | | | | | | | | |

## Patentansprüche

1. Verfahren zur Herstellung von Polyurethanweichschaumstoffen durch Umsetzung von organischen und/oder modifizierten organischen Polyisocyanaten (a) mit einem Polyolgemisch (b) und gegebenenfalls weiteren gegenüber Isocyanaten reaktive Wasserstoffatome aufweisenden Verbindungen (c) in Gegenwart von Wasser und/oder anderen Treibmitteln (d), Katalysatoren (e) und gegebenenfalls weiteren Hilfs- und Zusatzstoffen (f), **dadurch gekennzeichnet, dass** das Polyolgemisch (b) besteht
aus
b1) mindestens einem mindestens zweifunktionellen Polyesterol auf der Basis von Adipinsäure und mehrfunktionellen Alkoholen mit einer OH-Zahl von 40 bis 100 mg KOH/g in Anteilen von mehr als 50 Gew.-%, bezogen auf das Gesamtgewicht der Komponente b),
b2) mindestens einem mindestens zweifunktionellen Polyetherol auf der Basis von Propylenoxid und/oder Butylenoxid bei einer OH-Zahl von größer als 25 mg KOH/g in Anteilen von weniger als 25 Gew.-%, bezogen auf das Gesamtgewicht der Komponente b),
und gegebenenfalls
b3) mindestens einem weiteren Polyetherol auf der Basis von Ethylenoxid und Propylenoxid und/oder Butylenoxid mit einem Anteil an primären OH-Gruppen von mehr als 30 % in Anteilen von 0 bis 25 Gew.-%, bezogen auf das Gesamtgewicht der Komponente b).

2. Verfahren nach Anspruch 1, **dadurch gekennzeichnet, dass** als Polyesterol (b1) mindestens ein mindestens zweifunktioneller Polyesteralkohol auf der Basis von Adipinsäure, Diethylenglykol und Trimethylolpropan mit einer OH-Zahl von 40 bis 70 mg KOH/g eingesetzt wird.

3. Verfahren nach Anspruch 1 oder 2, **dadurch gekennzeichnet, dass** als Polyetherol (b2) mindestens eine zwei- bis dreifunktionelle Verbindung mit einer OH-Zahl von 40 bis 150 mg KOH/g eingesetzt wird.

4. Verfahren nach einem der Ansprüche 1 bis 3, **dadurch gekennzeichnet, dass** das Polyol b1) in Anteilen von mehr als 55 Gew.-%, bezogen auf das Gesamtgewicht der Komponente b), eingesetzt wird.

5. Verfahren nach einem der Ansprüche 1 bis 4, **dadurch gekennzeichnet, dass** das Polyol b2) in Anteilen von weniger als 20 Gew.-%, bezogen auf das Gesamtgewicht der Komponente b), eingesetzt wird.

6. Verfahren nach einem der Ansprüche 1 bis 4, **dadurch gekennzeichnet, dass** das Polyol b3) in Anteilen von weniger als 22 Gew.-%, bezogen auf das Gesamtgewicht der Komponente b), eingesetzt wird.

7. Verfahren nach einem der Ansprüche 1 bis 6, **dadurch gekennzeichnet, dass** als organische und/oder modifizierte organische Polyisocyanate (a) Toluylendiisocyanat, Gemische aus Diphenylmethandiisocyanat-Isomeren, Gemische aus Diphenylmethandiisocyanat und Polyphenylpolymethylenpolyisocyanat oder Toluylendiisocyanat mit Diphenylmethandiisocyanat und/oder Polyphenylpolymethylenpolyisocyanat und/oder aus diesen Isocyanaten abgeleitete Prepolymere eingesetzt werden.

8. Verfahren nach einem der Ansprüche 1 bis 7, **dadurch gekennzeichnet, dass** als Komponente a) Toluylendiisocyanat (80/20) eingesetzt wird.

9. Polyurethanweichschaumstoffe, herstellbar nach einem der Ansprüche 1 bis 8.

10. Verwendung der Polyurethanweichschaumstoffe gemäß Anspruch 9 für flammkaschierbare oder hochfrequenzverschweißbare Verbundstoffe.

11. Verwendung der Polyurethanweichschaumstoffe gemäß Anspruch 9 oder 10 für Polsterzwecke, im Fahrzeugbau und im medizinischen Bereich.
